Europäisches Patentamt

European Patent Office

Office européen des brevets

(11) Publication number : **0 472 488 A1**

# (12) EUROPEAN PATENT APPLICATION

(21) Application number : 91500098.8

(51) Int. Cl.⁵ : **B01D 53/04**

(22) Date of filing : 13.08.91

A request for correction of sub-bitumonous coal instead of lignitic coal has been filed pursuant to Rule 88 EPC. A decision on the request will be taken during the proceedings before the Examining Division (Guidelines for Examination in the EPO, A-V, 2.2).

(30) Priority : 20.08.90 ES 9002218

(43) Date of publication of application :
26.02.92 Bulletin 92/09

(84) Designated Contracting States :
AT BE CH DE DK FR GB GR IT LI LU NL SE

(71) Applicant : **CARBONES PEDRAFORCA, S.A.**
Pg. de la Paz, 7
E-08600 Berga (Barcelona) (ES)

(72) Inventor : **Moreno Alvarez, Carlos**
Paseo de la Paz 7
E-08600 Berga (Barcelona) (ES)

(74) Representative : **Ponti Grau, Ignasi**
Pg. de Gracia, 33
E-08007 Barcelona (ES)

(54) **Procedure and device for the recovery of hydrocarbons from evaporation emissions, specially in automobiles.**

(57)   The gases flow through an adsorption mass formed by a bed of activated charcoal based on lignitic coal, impregnated with a halogenated compound of high electronic density, and a current of hot air recirculates through said impregnated mass, the hydrocarbons being recovered in the form of condensates for reutilization thereof. The recovery device comprises a chamber (1), with an inlet (7) provided with a valve (7a) for the admission of gases and an outlet (3) for clean gases, with the inner container (5) of the adsorption mass housed in and communicating with the interior of the chamber (1), which chamber presents an inlet (2) for the hot air, an outlet (8) for the cold air and an evacuation outlet (4).

EP 0 472 488 A1

The present invention refers to a procedure for the recovery of hydrocarbons from evaporation emissions, for use specially in automotion, but which can likewise be applied to any installation in which such hydrocarbons are handled (petrol stations, refineries, fuel tanks, etcetera), allowing through such recovery a remarkable saving in fuel consumption.

The invention similarly refers to the corresponding device for carrying out of the aforesaid procedure.

## BACKGROUND OF THE INVENTION

Up to the present no methods are known to allow recovery of evaporated hydrocarbons, neither in automotion nor in other industrial fields, so that the evaporation gases of hydrocarbons pass directly into the atmosphere, which, in addition to representing a notable loss of fuel, also constitutes a source of pollution and deterioration of the environment, well-known for the problems it involves, specially in automotion, in the large urban centres, in which traffic is one of the main causes of pollution.

No background can therefore be mentioned in this respect.

## DESCRIPTION OF THE INVENTION

In accordance with the invention, the procedure is essentially based on carrying out said recovery in two principal phases, in the first of which the evaporated hydrocarbon gases, suitably collected and channelled, flow through the mass of a chemically treated substance, in order to facilitate retention of said gases by adsorption, following which, in a second phase, a hot air flow is introduced into the mass, at a temperature between 30 and 90°C, leading to recirculation and consequent desorption, the hydrocarbons being collected in the form of condensates for reutilization thereof.

In accordance with the invention, the adsorption mass consists of a lignitic coal-based activated charcoal impregnated with a halogenated compound of high electronic density, which can be based on chlorine or bromine.

The invention likewise refers to the device for carrying out the aforesaid procedure, which device comprises a chamber, with an inlet provided with a valve for the hydrocarbon-bearing gases, and an outlet for clean gases, the inlet being connected with the adsorption mass tank, which is in turn housed within said chamber and is in communication with its interior, which chamber further presents an inlet for the recirculation of hot air and an outlet for the resulting cold air. The chamber, for its part, also presents an evacuation outlet for the recovered hydrocarbon condensates.

## DESCRIPTION OF THE DRAWINGS

For a better understanding of all that has been set forth, there are attached some drawings in which, in a purely schematic way and only by way of example, without any restrictive character whatsoever, a practical case of embodiment of a device suitable for carrying out the procedure object of the invention is shown.

## DESCRIPTION OF A PREFERRED EMBODIMENT

As can be seen in the aforesaid drawings, the device shown consists in a container or tank -1-, with opening -2- for inlet of hot air from the outside, together with outlets for clean gases -3- and hydrocarbon condensates -4-.

Inside said tank -1- is a second container -5-, of smaller dimensions, which contains the filtration bed for adsorption and which has a perforated base -6-, to act as a filter and collector. The container -5- is connected with the exterior through opening -7-, provided with valve -7a- and connected to the inlet of the evaporation gases of the hydrocarbons to be recovered and to an air outlet opening -8-.

In order to carry out the process object of the invention, the interior of the filter-container -5- has an activated lignitic coal adsorbent mass with an adsorption surface of between 1000 and 1500 m2/g of substance, a pore volume with respect to the volume of the particle of the order of 50% and a pore diameter ranging between 1 and 500 Angström, whose diameter is sufficient for adsorption of the hydrocarbon molecules which evaporate from normal fuels (butane, butene, hexane, octane and the like).

For activation of the lignitic coal mass the base of activated charcoal mass is chemically treated by means of impregnation with a halogenated compound (which may be based on chlorine or bromine), which adheres to the surface of the activated charcoal and facilitates union of the organic molecule with the adsorbent.

The device thus prepared, the corresponding hydrocarbon evaporation gases are introduced through the opening -7-, passing them to the interior of the filter-container -5- and causing them to flow through the adsorption mass, while the hot air introduced through opening -2- is also forced to flow in counter-flow through said mass. Thus the hydrocarbon vapours in contact with the air circulating in counter-flow condense and are collected in the base of tank -1-, being evacuated through the inferior opening -4- for reutilization thereof.

Some of said non-condensated gases will emerge through opening -3- in the form of gases, and may be again recirculated through opening -7- up to their consumption. On the other hand, the air circulating in counter-flow, at the outlet of the filter-container -5- will pass to the exterior through opening -8- or it can be used as intake gas for the engine.

As can be seen, both the treatment process and the device described are very simple, allowing levels of recovery not implemented to date, and which according to findings in the experimental field can normally achieve retention percentages ranging between 25 and 40%, figures which can reach 95% if the circuit is duplicated, outgoing gases left over after the first treatment recirculating in an installation with a single element like the one described.

As can be understood, all this is of importance, specially in respect of the hydrocarbon savings and the environmental consequences which their escape into the atmosphere can represent from the point of view of pollution and ecology.

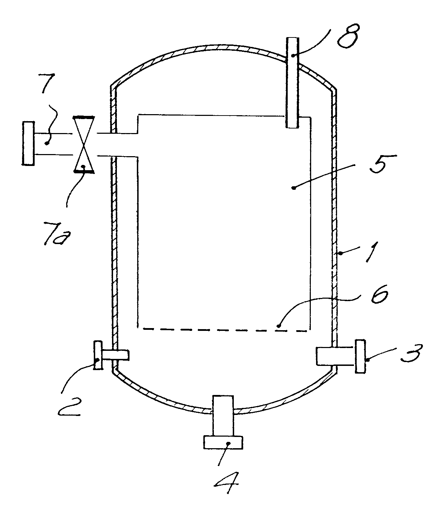

## Claims

1.- Procedure for the recovery of hydrocarbons from evaporation emissions, specially for automobiles, following the method of microfiltration and adsorption, which is characterised in that the gases containing evaporated hydrocarbons pass through an adsorption mass constituted by a bed of activated charcoal based on lignitic coal, impregnated with a halogenated compound of high electronic density, preferably based on chlorine or bromine, after which a hot air flow at temperatures between 30 and 90°C is forced to recirculate through the impregnated mass , the hydrocarbons being collected in the form of condensates for reutilization thereof.

2. Device for the recovery of hydrocarbons from evaporation emissions, especially for automobiles, by applying the procedure described in the previous claim, which device is characterised in that it comprises a chamber (1), with an inlet (7) provided with a valve (7a) for the admission of the gases containing hydrocarbons, and an outlet (3) for clean gases, the inlet being connected with the adsorption mass tank (5), which is in turn housed within that chamber and in communication with its interior, which chamber further presents an inlet (2) for hot air recirculation, an outlet (8) for the resulting cold air, and an evacuation outlet (4) for the recovered hydrocarbon condensates.

EP 0 472 488 A1

European Patent Office

**EUROPEAN SEARCH REPORT**

Application Number

EP 91 50 0098

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 037 537 (FRAUNHOFER-GESELLSCHAFT) * Page 4, lines 12-16; page 14, line 31 - page 15, line 4; claims 1-9 * | 1,2 | B 01 D 53/04 |
| Y | US-A-3 902 874 (McANDREW) * Column 7, lines 24-30; abstract; claims 1-5 * | 1,2 | |
| Y | US-A-4 869 739 (KANOME et al.) * Figure 1; column 1, lines 6-7; column 1, line 62 - column 2, line 5; column 2, line 35 - column 3, line 4; claims 1,10 * | 1,2 | |
| Y | DE-A-2 809 576 (ARC) * The whole document * | 1,2 | |
| | | | TECHNICAL FIELDS SEARCHED (Int. Cl.5) |
| | | | B 01 D |

The present search report has been drawn up for all claims

| Place of search | Date of completion of the search | Examiner |
|---|---|---|
| THE HAGUE | 15-11-1991 | EIJKENBOOM A.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

6